# EUROPEAN PATENT APPLICATION

(11) **EP 1 806 917 A2**
(43) Date of publication of application: **11.07.2007**
(21) Application number: 06077339.7
(22) Date of filing: 29.12.2006
(51) Int. Cl.: H04N 5/445

(54) **On-screen display device and control method thereof**

(30) Priority: 09.01.2006 KR 20060002434
(71) Applicant: Samsung Electronics Co., Ltd., Suwon-si, Gyeonggi-Do (KR)
(72) Inventor: Park, Heung-jun, Hyundai Home Town, Suwon-si Gyeonggi-do (KR); Kim, Young-chan, Daewon Cantavil 1 - danjl, Ulwang-si Gyeonggi-do (KR)
(74) Representative: Hylarides, Paul Jacques

(57) **Abstract**

An on-screen display device including: an on-screen display generating unit to generate an on-screen display picture on the basis of previously stored font data and a controller to control the on-screen display generating unit to generate the on-screen display picture by adjusting a display position and a rotational position of the font data.

## Description

### CROSS-REFERENCE TO RELATED APPLICATIONS

This application claims priority from Korean Patent Application No.2006-0002434, filed on January 9, 2006 in the Korean Intellectual Property Office, the disclosure of which is incorporated herein by reference.

### BACKGROUND OF THE INVENTION

### Field of the Invention

The present general inventive concept relates to an on-screen display device and a control method thereof, and more particularly, to an on-screen display device and a control method thereof to generate an on-screen display picture using font data.

### Description of the Related Art

In general, a display device, set-top box or the like generates a predetermined on-screen display (OSD) picture to be displayed on a display unit for user convenience. Through this OSD picture, a user can easily control a picture state, a represented language and the like, which are set in the display device, set-top box, etc. Herein, the picture state may include brightness, contrast, vertical and horizontal sizes, color temperature, and RGB color ratio and the like for a picture, and the represented language may include various types of languages and the like, which are represented within the OSD picture.

However, a conventional OSD device, such as a display device, a set-top box and the like, for providing an OSD picture has a problem that a large amount of font data cannot be stored due to restriction of storage space of an internal memory. Therefore, manufacturers of OSD devices simplify the OSD picture to the utmost so as to reduce the required amount of font data. However, this may result in insufficient information obtained by the user through the OSD picture.

Moreover, in a case where a complicated OSD picture has to be inevitably implemented, the required amount of font data may not be stored in a font memory, and, as a result, there may arise a problem in that the font memory is refreshed while the OSD picture is generated and new font data has to be stored in the refreshed font memory.

### SUMMARY OF THE INVENTION

The present general inventive concept provides an OSD device and a control method thereof to control a rotational position of font data to provide an OSD picture which can be conveniently used by a user even with a small storage space for the OSD picture.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept can be achieved by providing an on-screen display device comprising: an on-screen display generating unit to generate an on-screen display picture on the basis of previously stored font data; and a controller to control the on-screen display generating unit to generate the on-screen display picture by adjusting a display position and a rotational position of the font data.

The on-screen display generating unit may comprise a font rotation unit to adjust the rotational position of the font data, and the controller controls the font rotation unit to adjust the rotational position of the font data.

The rotational position may comprise a position at which the font data is rotated by at least one of 0, 90, 180, and 270 degrees.

The on-screen display generating unit may comprise a display memory to store the font data whose display position and rotational position are adjusted according to the on-screen display picture.

The on-screen display device may further comprise a user selection unit to select generation of a predetermined on-screen display picture, wherein the controller controls the on-screen display generating unit to generate the on-screen display picture when a selection signal of the user selection unit is applied to the controller.

The on-screen display device may further comprise: a signal receiving unit to receive a video signal from the outside; and a signal processing unit to combine the video signal received via the signal receiving unit with the stored font data corresponding to information regarding the position.

The on-screen display device may further comprise a display unit, wherein the controller controls the signal processing unit to output the stored font data corresponding to the information regarding the position to the display unit.

The font data may comprise a displayable character, number, and symbol.

The foregoing and/or other aspects and utilities of the present general inventive concept can also be achieved by providing a control method of generating an on-screen display picture of an on-screen display device, comprising: selecting generation of the on-screen display picture; adjusting a display position and a rotational position of font data according to the on-screen display picture and generating and storing an on-screen display picture with the adjusted display position and rotational position of the font data; and displaying the stored on-screen display picture.

The rotational position may comprise a position at which the font data is rotated by at least one of 0, 90, 180, and 270 degrees according to the on-screen display picture.

The foregoing and/or other aspects and utilities of the present invention general inventive concept can also be achieved by providing a on-screen-display (OSD) device, comprising: a font rotation unit to adjust font data received from a font storage location; and a control unit to control operations of the font rotation unit when a predetermined OSD picture is requested; and a display memory to store the adjusted font data to be displayed by a display unit.

The font rotation unit can adjust rotational position and/or direction position of the font data.

The OSD picture is generated by each font data having the adjusted positional information.

The OSD can further comprise a user selection unit to request the predetermined OSD picture to be displayed.

The positional information can include the rotational position according to a shape of the font data.

The foregoing and/or other aspects and utilities of the present invention general inventive concept can also be achieved by providing a method of controlling an on-screen-display, comprising adjusting font data received from a font storage location when a predetermined OSD picture is requested and storing the adjusted font data to be displayed.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a control block diagram of an OSD device according to an embodiment of the present general inventive concept;
FIG. 2A is a view illustrating an example of an OSD picture displayed on a display unit in the OSD device according to the embodiment of the present general inventive concept;
FIG. 2B is a view illustrating one example of font data stored in a font memory in the OSD device according to the embodiment of the present general inventive concept;
FIG. 3 is a control flow chart illustrating an operation of the OSD device according to the embodiment of the present general inventive concept; and
FIG. 4 is a view illustrating font data stored in a font memory in a conventional OSD device.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

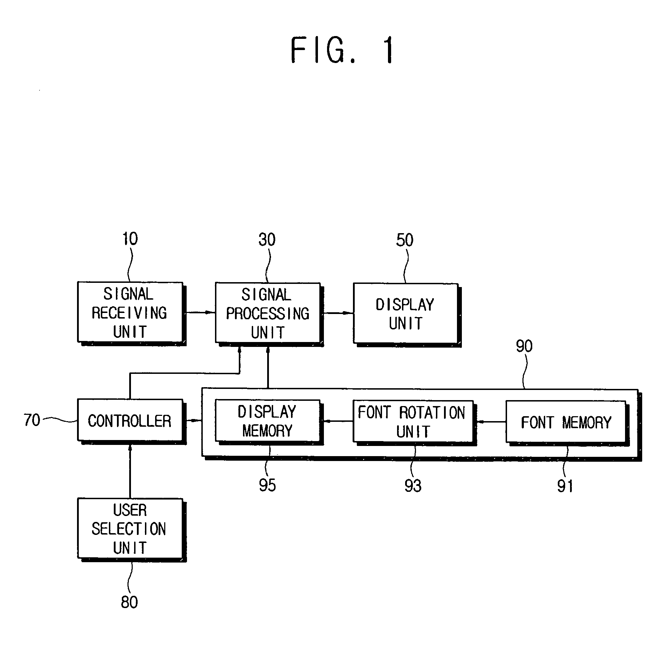

As illustrated in FIG. 1, an OSD device according to an exemplary embodiment of the present general inventive concept includes an OSD picture generating unit 90 and a controller 70 to control the OSD picture generating unit 90. Furthermore, the OSD device may further include a signal receiving unit 10, a signal processing unit 30, and at least one of a display unit 50 and a user selection unit 80.

The signal receiving unit 10 receives video signals from an external source. In this case, the signal receiving unit 10 may include terminals corresponding to a variety of formats according to which various formats of video signals can be received. For example, the signal receiving unit 10 may include at least one of a composite input terminal to receive a composite signal, an input terminal to receive a S-video signal, a component input terminal to receive a component signal, a PC input terminal to receive a PC signal, and a TV input terminal such as an antenna or the like for receiving a TV signal.

The signal processing unit 30 processes a video signal received from the aforementioned signal receiving unit 10 to be displayed on the display unit 50. In a case where a plurality of the signal receiving units 10 are provided, the signal processing unit 30 processes only a video signal received through one selected among the plurality of the signal receiving units 10 to be displayed on the display unit 50.

Moreover, in this embodiment, the signal processing unit 30 may include a scaler (not shown) to scale a video signal, an A/D converter (not shown) to convert an input analog video signal into a digital video signal, a mixer (not shown) to mix a video signal received via the signal receiving unit 10 with a signal output from the OSD picture generating unit 90, which will be described in detail later, and the like in a variety of ways.

The OSD picture generating unit 90 generates a predetermined OSD picture to be displayed on the display unit 50.

The OSD picture generated by this OSD picture generating unit 90 may include a variety of information such as a picture state, a represented language, etc., and may be provided for a user to adjust the information provided on the OSD picture.

Through this OSD picture, the user can easily change the picture state, the represented language, and the like, which are set in a display device, a set-top box, etc. Herein, the picture state may include brightness, contrast, vertical and horizontal sizes, color temperature, and RGB color ratio, etc., for a picture, and the represented language may include various types of languages and the like, which are represented within the OSD picture.

In this embodiment, the OSD picture generating unit 90 may include a font memory 91, a font rotation unit 93, and a display memory 95.

The font memory 91 stores a plurality of font data. Herein, the font data generally refers to all types of fonts, such as characters, numbers, and symbols, which can be displayed on the display unit 50. For example, the font data include alphabets, arrows, bold lines, numbers and the like, which are required to generate the OSD picture.

The font rotation unit 93 adjusts rotational position or direction of the font data applied from the font memory 91. Specifically, upon receiving a right arrow font from the font memory 91, the font rotation unit 93 may adjust the direction of the arrow to a different direction such as left, downward, upward, etc., as necessary. Alternatively, the font rotation unit 93 may directly output the font data to the display memory 95 without rotation. In this case, a rotation angle is 0 degrees when the font data is not rotated, and thus it can be said that the font data is rotated by 0 degrees by the font rotation unit 93 when the font data is not rotated.

The display memory 95 stores positional information of font data, that is, font data whose rotational position and display position are adjusted, under control of the controller 70, which will be described in detail later. In other words, the display memory 95 stores the font data whose display position and rotational position are adjusted according to the OSD picture. The OSD picture is generated by each font data having the adjusted positional information. In other words, the OSD picture is generated by each font data corresponding to predetermined positional information stored in the display memory 95. Furthermore, the display memory 95 outputs each of the stored font data to the signal processing unit 30 under control of the controller 70, which will be described in detail later.

The display unit 50 receives a video signal output from the signal processing unit 30 and displays an image on a screen. The display unit 50 includes a display module (not shown) on which a video is displayed, and a module driving unit (not shown) to process the received video signal to be displayed on the display module.

In this embodiment, the display module may include various types of display modules such as a CRT (Cathode Ray Tube), a DLP (Digital Light Processing), an LCD (Liquid Crystal Display), and a PDP (Plasma Display Panel). In this case, the module driving unit includes an optical engine in a case where the display module is the DLP, and the module driving unit includes a printed circuit board to convert the video signal received from the signal processing unit 30 into a data signal and a gate signal in a case where the display module is the LCD. In this manner, the display unit 50 may have a configuration of the module driving unit which corresponds to the type of display module.

The user selection unit 80 outputs a predetermined key signal to the controller 70, which will be described in detail later, according to manipulation by the user. The user selection unit 80 is provided for a user to input and/or select a predetermined function, and may be implemented in various ways with a plurality of input keys, buttons, a remote controller, a mouse, or the like.

With the selection of the user selection unit 80, when it is determined that it is required to generate a predetermined OSD picture, the controller 70 controls the OSD picture generating unit 90 to generate the OSD picture. Specifically, the controller 70 stores the positional information of the font data and controls the OSD picture generating unit 90 to generate the OSD picture by adjusting the display position and rotational position of the font data according to the stored positional information.

Herein, the positional information includes display information indicating where the OSD screen is positioned on the display unit 50 and display information indicating where each font data is positioned on the OSD picture. Furthermore, as described above, the positional information includes the rotational position according to a shape of the font data.

Specifically, the controller 70 controls font data required to generate the OSD picture among the font data stored in the font memory 91 to be applied to the font rotation unit 93. Furthermore, the controller 70 controls the font rotation unit 93 to rotate the font data to be suitable for data which is required for the generation of the OSD picture to be displayed according to the positional information. Furthermore, the controller 70 outputs the rotated font data from the font rotation unit 93 to the display memory 95 according to the positional information, and stores the font data adjusted according to the positional information in the display memory 95.

Furthermore, the controller 70 controls font data, rotated in one direction by the font rotation unit 93 to be stored, as data separately from font data rotated in another direction, in the display memory 95, as described below.

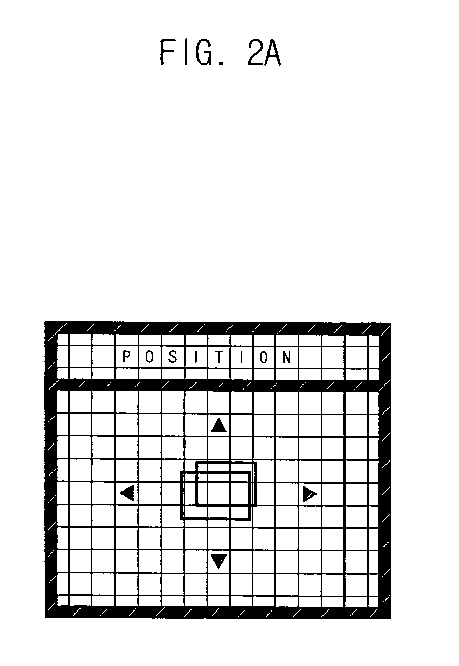

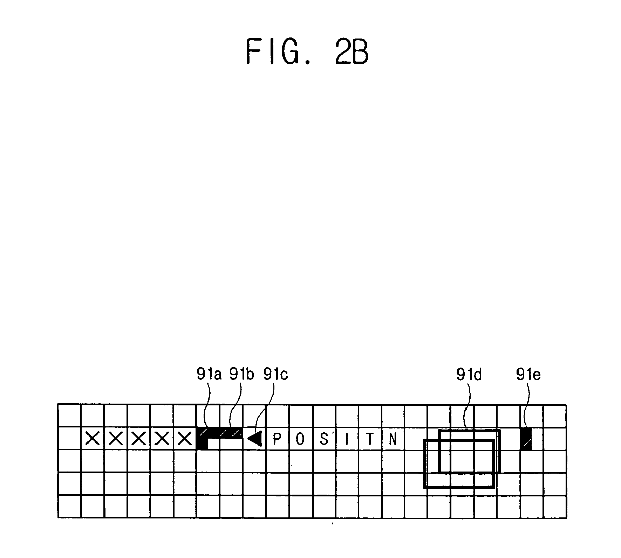

FIG. 2A illustrates the OSD picture which is displayed on the display unit 50 in the OSD device according to the present embodiment, and FIG. 2B illustrates the font data stored in the font memory 91 to generate the OSD picture as illustrated in FIG. 2A.

Information such as the OSD picture illustrated in FIG. 2A is stored in the display memory 95, and the data stored in the display memory 95 is output to the display unit 50 on which the OSD picture is displayed as illustrated in FIG. 2A.

As illustrated in FIG. 2B, for example, font data such as letters "P", "0", "S", "I", "T", and "N", and symbols denoted by reference numbers 91a, 91b, 91c, 93d and 91e, etc., are stored in the font memory 91.

At this time, according to a selection through the user selection unit 80, when the OSD screen as illustrated in FIG. 2A is generated, each letter stored in the font memory 91 is output to the display memory 95 through the font rotation unit 93, and then, each font data for a word "POSITION" is stored in the display memory 95 according to the positional information.

Furthermore, the controller 70 controls the font rotation unit 93 to rotate the symbol 91a to be displayed at each corner of the OSD picture. In other words, the controller 70 controls the font rotation unit 93 to rotate the symbol 91a by 0 degrees, and then stores the symbol 91a rotated by 0 degrees in the display memory 95 to correspond to the positional information of the upper left corner of the OSD picture.

Furthermore, the controller 70 controls the font rotation unit 93 to rotate the symbol 91a by 270 degrees, and stores the symbol 91a rotated by 270 degrees in the display memory 95 to correspond to the positional information of the upper right corner of the OSD picture.

Moreover, the controller 70 controls the font rotation unit 93 to rotate the symbol 91a by 180 degrees, and stores the symbol 91a rotated by 180 degrees in the display memory 95 to correspond to the positional information of the lower right corner and middle right edge of the OSD picture.

Furthermore, the controller 70 controls the font rotation unit 93 to rotate the symbol 91a by 90 degrees, and stores the symbol 91a rotated by 90 degrees in the display memory 95 to correspond to the positional information of the lower left corner and middle left edge of the OSD picture.

In this manner, one symbol such as the symbol 91a can be used with four shapes through rotation under control of the controller 70. Similarly, symbols 91b, 91c, 91d, and 91e can be also used with various shapes, respectively. Moreover, although it is illustrated that symbols 91b and 91d are different from each other and separately stored in the font memory 91, it should be understood that each of the symbols 91b and 91d may generate the same shape by using only one symbol to represent both symbols.

As described above, the font rotation unit 93 can cause each font data to be rotated by 0, 90, 180, and 270 degrees. Although it is illustrated in this embodiment that the font data is rotated in four directions, the font rotation unit 93 can freely control the rotation angle of the font to any degrees. Also, although it is illustrated in this embodiment that the rotational position of the symbol 91a is adjusted, it should be understood that rotational position of the letters, for example, "P," may be also adjusted.

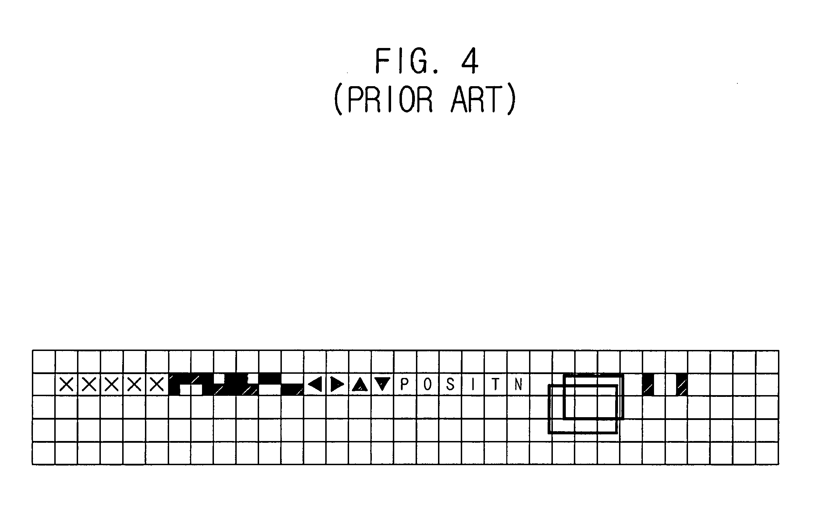

On the other hand, in a conventional on-screen display device, referring to FIG. 4, there are provided 4 symbols in four respective directions for font data corresponding to the symbol 91a, and also font data corresponding to symbols 91b, 91c, and 91e, respectively, are provided in respective directions.

In this embodiment, the font rotation unit 93 divides a block containing a font into a plurality of sub blocks. Then, among the plurality of sub blocks, the font rotation unit 93 defines sub blocks in black as, for example, "1," and sub blocks in white as, for example, " 0, " produces coordinates with "1" or "0," and then rotates the coordinates to obtain the font data.

Hereinafter, an operation of the OSD device according to an embodiment of the present general inventive concept will now be described.

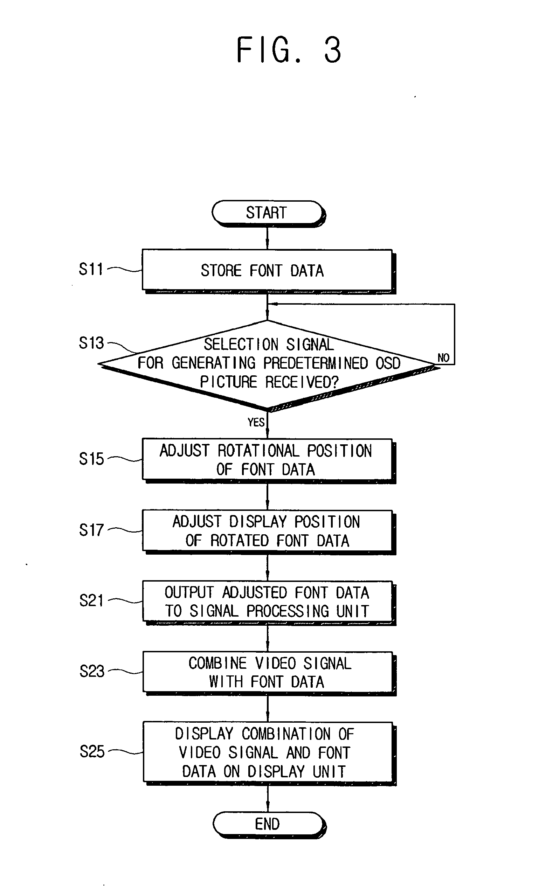

As illustrated in FIG. 3, the font memory 91 of the OSD device stores predetermined font data at operation S11. In this case, the font data includes data positioned in only one direction.

When a selection signal to generate an OSD picture is received through the user selection unit 80 at operation S13, the font rotation unit 93 controls rotational position of the font data stored in the font memory 91 according to the positional information at operation S15. In other words, the font rotation unit 93 controls the rotational position of the font data according to the OSD picture. The operation of the font rotation unit 93 has been described above, and therefore, a duplicate description thereof will be omitted.

Moreover, as to the font data rotated the font rotation unit 93, the display position displayed on the display unit is also adjusted at operation S17 under control of the controller 70, and then, is stored in the display memory 95. Although it is illustrated in this embodiment that the rotational position of the font data is adjusted according to the positional information and then the display position is adjusted, it should be understood that this order may be reversed.

Next, the controller 70 outputs each font data stored in the display memory 95, as the OSD picture, to the signal processing unit 30 at operation S21. Then, the signal processing unit 30 combines a video signal received via the video receiving unit with a plurality of font data corresponding to the OSD picture generated from the display memory 95 at operation S23. Furthermore, the controller 70 controls the video signal and font data combined by the signal processing unit 30 to be displayed on the display unit 50 at operation S25.

As described above, the OSD device according to the embodiments of the present general inventive concept can implement various shapes of font data according to various rotation angles by rotating one font data. Therefore, the OSD device can generate various font data with a small capacity of memory. Accordingly, the OSD device can generate more various OSD pictures for a user's convenience with the smaller capacity of memory than conventional OSD devices.

As apparent from the above description, the present general inventive concept provides an OSD device and a control method thereof to adjust the rotational position of font data to provide an OSD picture which can be conveniently used by a user even with a small storage space for the OSD picture.

Accordingly, the OSD device and the control method thereof can have an effect that the whole storage space can be reduced by reducing the storage space of the font memory.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. An on-screen display device comprising:
an on-screen display generating unit to generate an on-screen display picture on the basis of previously stored font data; and
a controller to control the on-screen display generating unit to generate the on-screen display picture by adjusting a display position and a rotational position of the font data.

2. The on-screen display device according to claim 1, wherein the on-screen display generating unit comprises a font rotation unit to adjust the rotational position of the font data, and the controller controls the font rotation unit to adjust the rotational position of the font data.

3. The on-screen display device according to claim 2, wherein the rotational position comprises a position at which the font data is rotated by at least one of 0, 90, 180, and 270 degrees.

4. The on-screen display device according to one of claims 1 through 3, wherein the on-screen display generating unit comprises a display memory to store the font data whose display position and rotational position are adjusted according to the on-screen display picture.

5. The on-screen display device according to claim 4, further comprising:
a user selection unit to select generation of a predetermined on-screen display picture,
wherein the controller controls the on-screen display generating unit to generate the on-screen display picture when a selection signal of the user selection unit is applied to the controller.

6. The on-screen display device according to claim 4 or 5, further comprising:
a signal receiving unit to receive a video signal from an outside source; and
a signal processing unit to combine the video signal received via the signal receiving unit with the stored font data corresponding to information regarding the position.

7. The on-screen display device according to claim 6, further comprising a display unit,
wherein the controller controls the signal processing unit to output the stored font data corresponding to the information regarding the position to the display unit.

8. The on-screen display device according to one of claim 1 through 7, wherein the font data comprises a displayable character, number, and symbol.

9. A control method of generating an on-screen display picture of an on-screen display device, comprising:
selecting generation of the on-screen display picture;
adjusting a display position and a rotational position of font data according to the on-screen display picture and generating and storing an on-screen display picture with the adjusted display position and rotational position of the font data; and
displaying the stored on-screen display picture.

10. The control method according to claim 9, wherein the rotational position comprises a position at which the font data is rotated by at least one of 0, 90, 180, and 270 degrees according to the on-screen display picture.

11. The control method according to claim 9 or 10, wherein the font data comprises a displayable character, number, and symbol.

12. An on-screen-display (OSD) device, comprising:
a font rotation unit to adjust font data received from a font storage location; and
a control unit to control operations of the font rotation unit when a predetermined OSD picture is requested; and
a display memory to store the adjusted font data to be displayed by a display unit.

13. The OSD device according to claim 12, wherein the font rotation unit adjusts rotational position and/or direction position of the font data.

14. The OSD device according to claim 13, wherein the OSD picture is generated by each font data having the adjusted positional information.

15. The OSD device according to claim 13 or 14, further comprising:
a user selection unit to request the predetermined OSD picture to be displayed.

16. The OSD device according to any of the claims 12-15, wherein the control unit stores the positional information of the font data and controls the font rotation unit and display memory to generate the OSD picture by adjusting the display position and rotational position of the font data according to the stored positional information.

17. The OSD device according to claim 14, wherein the positional information includes the rotational position according to a shape of the font data.

18. A method of controlling an on-screen-display, comprising:
adjusting font data received from a font storage location when a predetermined OSD picture is requested; and
storing the adjusted font data to be displayed.
